# FASCICULE DE BREVET EUROPEEN

(11) **EP 1 847 088 B1**
(45) Date de publication et mention de la délivrance du brevet: **26.11.2008**
(21) Numéro de dépôt: 05850633.8
(22) Date de dépôt: 28.12.2005
(51) Int. Cl.: H04L 29/06, G10L 15/28, G10L 11/02

(54) **PROCEDE DE TRANSMISSION DE MARQUES DE FIN DE PAROLE DANS UN SYSTEME DE RECONNAISSANCE DE LA PAROLE**
VERFAHREN ZUM SENDEN VON SPRACHENDEMARKIERUNGEN IN EINEM SPRACHERKENNUNGSSYSTEM
METHOD OF TRANSMITTING END-OF-SPEECH MARKS IN A SPEECH RECOGNITION SYSTEM

(30) Priorité: 04.02.2005 FR 0550322
(43) Date de publication de la demande: 24.10.2007
(73) Titulaire: France Télécom, 75015 Paris (FR)
(72) Inventeur: FERRIEUX, Alexandre, F-22560 Pleumeur Bodou (FR)
(74) Mandataire: de la Fouchardière, Marie-Noelle
(86) Numéro de dépôt international: PCT/FR2005/003309
(87) Numéro de publication internationale: WO 2006/082288

(56) Documents cités:
- GB-A- 2 396 271
- US-A1- 2003 061 036
- Q. XIE: "RTP Payload Format for European Telecommunications Standard Institute (ETSI) European Standard ES 201 108 Distributed Speech Recognition Encoding"[Online] juillet 2003 (2003-07), pages 1-15, XP002343748 Extrait de l'Internet: URL:http://www.faqs.org/ftp/rfc/pdf/rfc355 7.txt.pdf> [extrait le 2005-09-07] cité dans la demande

## Description

La présente invention concerne un procédé de transmission de marques de fin de parole dans un système de reconnaissance distribuée de la parole fonctionnant en mode de transmission discontinue.

L'invention trouve une application particulièrement avantageuse dans le domaine général de la reconnaissance de la parole.

Plus spécialement, le contexte de l'invention est celui de la reconnaissance distribuée de la parole, ou DSR pour « Distributed Speech Recognition », telle qu'elle est définie dans les normes ETSI ES 201 108, ES 202 050, ES 202 212 et le document IETF RFC3557.

D'une manière générale, les procédés de reconnaissance de la parole impliquent, dans une première phase, l'extraction de paramètres acoustiques tirés d'un segment de parole prononcé par un locuteur, lequel peut être l'usager d'un terminal, notamment d'un téléphone portable. Dans une deuxième phase, les paramètres acoustiques obtenus sont traités par un système spécialisé de reconnaissance de la parole, de manière à rétablir le contenu phonétique du segment de parole prononcé. Un serveur, intégrant ce système de reconnaissance de la parole, peut alors réagir au propos ainsi restitué du locuteur. Ce serveur est, par exemple, un serveur vocal dans un système de téléphonie mobile.

La reconnaissance distribuée de la parole (DSR) consiste à effectuer les premiers stades de la reconnaissance de la parole, c'est à dire l'extraction des paramètres acoustiques, dans le terminal lui-même, et à en transmettre seulement le résultat vers le serveur. Ces paramètres étant choisis pour optimiser les performances de la reconnaissance de la parole, on obtient, à débit équivalent à celui d'un codeur-décodeur (« codec ») classique pour la conversation entre humains, une nette amélioration de la reconnaissance.

Le document RFC3557 mentionné plus haut décrit la transmission des paramètres acoustiques comme charge utile du protocole connu sous l'acronyme RTP (« Real Time Protocol », RFC3550). Un mode de mise en oeuvre de DSR proposé dans ce document concerne la Transmission Discontinue, ou DTX, qui consiste pour le terminal à envoyer des données en direction du serveur non pas en permanence, mais uniquement lors des segments de parole. A cet effet, la transmission de données n'est effectuée que lorsque l'usager presse une touche d'un dispositif « Push-to-Talk » ou sous le contrôle d'un détecteur d'activité vocale (VAD). On comprend que l'intérêt de ce mode de transmission discontinue réside dans l'économie de bande passante durant les périodes de silence.

Bien entendu, lorsque le mode DTX est utilisé, il est nécessaire pour le serveur vocal, par exemple, de connaître la fin des segments de parole afin de pouvoir indiquer au système de reconnaissance de la parole que toutes les données de paramètres acoustiques sont reçues et qu'il peut effectuer les opérations de reconnaissance et finaliser son résultat. Pour cela, le document RCF3557 prévoit des paquets de données spéciaux contenant des trames nulles et servant de marques de fin de parole.

Un inconvénient du mode DTX est qu'en cas de perte de paquets de trames nulles dans le réseau lors de la transmission des données, le serveur, n'étant plus informé de la fin de segments de parole, ne peut donner aucun ordre d'exécution au système de reconnaissance de la parole. Il en résulte que le serveur ne peut réagir au propos de l'usager, lequel doit alors subir de longues et inacceptables périodes d'attente.

Pour remédier à cet inconvénient, il est proposé un mécanisme de temporisation qui consiste à provoquer une réaction du serveur si aucune information de fin de segment de parole n'est reçue à la fin d'un laps de temps donné. Néanmoins, ce type de mécanisme aveugle est nécessairement lent du fait qu'il est lié aux délais, parfois longs, des segments de parole dans une conversation normale.

Aussi, le problème technique à résoudre par l'objet de la présente invention est de proposer un procédé de transmission de marques de fin de parole dans un système de reconnaissance distribuée de la parole fonctionnant en mode de transmission discontinue, système dans lequel des segments de parole sont émis, suivis de périodes de silence, chaque segment de parole étant terminé par une marque de fin de parole, qui permettrait de conférer au canal de signalisation constitué par les marques de fin de parole une meilleure robustesse vis à vis des pertes de transmission que celle obtenue avec un mécanisme de temporisation, en garantissant des délais liés aux seules conditions de réseau et non pas fixés arbitrairement à des durées de temporisation obligatoirement plus longues.

La solution au problème technique posé consiste, selon la présente invention, en ce que ladite marque de fin de parole est ré-émise continuellement pendant toute la durée de la période de silence suivant ledit segment de parole.

Ainsi, même si une perte de transmission se produit à la fin d'un segment de parole, provoquant la perte de la marque de fin contenue dans le segment tronqué, l'information de fin de segment pourra néanmoins être communiquée au serveur dès que le réseau sera redevenu opérationnel puisque la marque de fin ré-émise immédiatement après la reprise de la transmission pourra alors être reçue par le serveur. Le serveur est donc notifié de la fin de segment avec une réactivité très forte, soit pour ordonner l'exécution de l'opération de reconnaissance, soit, au contraire, pour rejeter un segment tronqué par les pertes en ligne.

Le rythme de ré-émission des marques de fin de parole, c'est à dire la durée de l'intervalle de temps séparant deux marques consécutives ré-émises doit répondre au compromis suivant :
- s'il est trop lent, l'usager peut ressentir de fortes latences, rejoignant ainsi les inconvénients des mécanismes de temporisation précités,
- s'il est trop rapide, la bande passante consommée pendant les périodes de silence peut se rapprocher de celle des périodes de parole, annulant alors l'intérêt de la transmission discontinue DTX. De plus, cette rapidité peut être inutile du fait de la tolérance temporelle de l'usager et de la corrélation temporelle des pertes de paquets selon laquelle deux marques de fin de parole ré-émises trop proches ont de fortes chances d'être perdues en même temps.

Deux options sont possibles : selon une première option, ladite marque de fin de parole est ré-émise à des intervalles de temps de même durée, alors que selon une deuxième option, ladite marque de fin de parole est ré-émise à des intervalles de temps de durée croissante. Cette deuxième option est avantageuse en terme de bande passante, mais elle présente le risque de réintroduire de fortes latences.

Un compromis satisfaisant consiste, selon l'invention, en ce que ladite durée est de l'ordre de la seconde.

Dans un mode de réalisation particulier de l'invention, il est prévu que la ré-émission de ladite marque de fin de parole est interrompue sur réception d'un message d'acquittement d'une marque de fin de parole ré-émise.

Cette disposition présente l'avantage d'une économie en bande passante et sera donc privilégiée lorsque la bande passante disponible est limitée. Dans le cas contraire, un acquittement de la part du serveur ne sera pas nécessaire, la bande passante consommée étant considérée comme tolérable même si la première marque de fin de parole parvient au serveur, bien que la ré-émission de marques de fin supplémentaires soit devenue inutile.

De manière à limiter encore la consommation de bande passante, l'invention prévoit que les marques de fin de parole sont transmises dans des paquets de longueur inférieure à la longueur nominale des paires de trames dans lesdits segments de parole.

Enfin, il faut signaler un autre avantage de l'invention, particulièrement sensible lors de fortes pertes de transmission. En effet, si le réseau est très perturbé, il peut se produire une perte totale d'un segment de parole. Si, par ailleurs, la transmission est restaurée durant la période de silence qui suit le segment perdu, le serveur vocal pourra néanmoins recevoir une marque de fin parole du fait de l'émission continuelle de marques de fin de parole prévue par l'invention. Or, les paquets transportant ces marques comprennent généralement une indication de la date de fin de parole du segment considéré, de sorte qu'en comparant les dates des deux dernières marques de fin de parole successivement reçues, le serveur peut détecter la perte du segment de parole et réagir auprès de l'usager de manière appropriée, en lui demandant par exemple de répéter son message.

La présente invention concerne également, conformément à la revendication 7, un terminal d'un système de reconnaissance distribuée de la parole fonctionnant en mode de transmission discontinue, le terminal étant apte à émettre des segments de parole, suivis de périodes de silence, chaque segment de parole étant terminé par une marque de fin de parole, ce terminal étant en outre apte à réémettre ladite marque de fin de parole continuellement pendant toute la durée de la période de silence suivant ledit segment de parole.

L'invention concerne encore, conformément à la revendication 13, un système de reconnaissance distribuée de la parole fonctionnant en mode de transmission discontinue, comprenant au moins un terminal selon l'invention dans lequel la réémission de la marque de fin de parole est interrompue sur réception d'un message d'acquittement d'une marque de fin de parole réémise, et comprenant un serveur vocal apte à émettre un message d'acquittement d'une marque de fin de parole réémise.

La description qui va suivre en regard des dessins annexés, donnés à titre d'exemples non limitatifs, fera bien comprendre en quoi consiste l'invention et comment elle peut être réalisée.

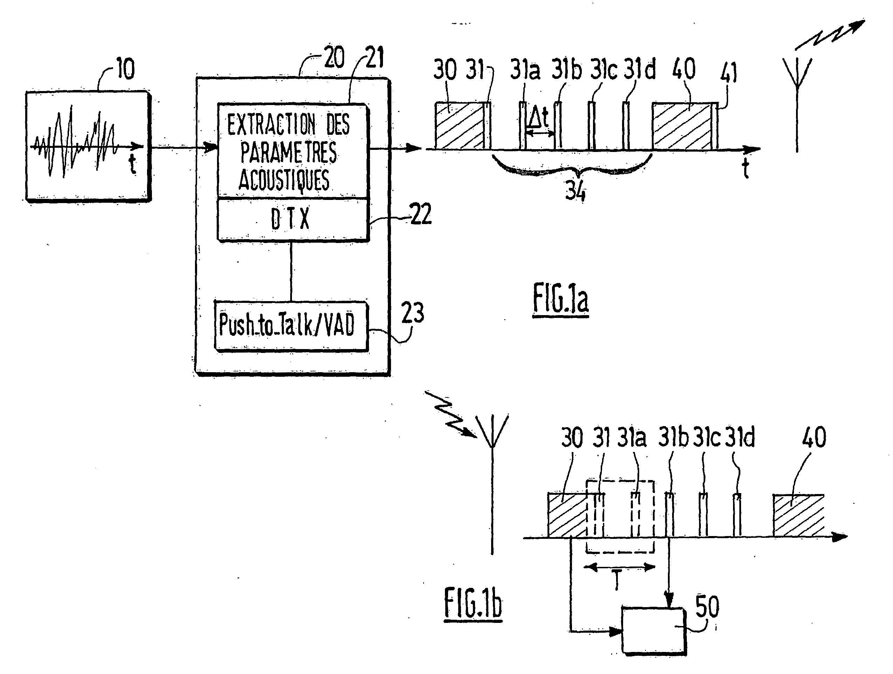

La figure 1 a est un schéma montrant les opérations effectuées dans un terminal mettant en oeuvre le procédé conforme à l'invention.

La figure 1b est un schéma montrant les opérations effectuées dans un serveur de reconnaissance vocal associé au terminal de la figure 1 a.

Sur la figure 1a sont représentées les différentes opérations successives effectuées dans un terminal, un téléphone portable par exemple, dans le cadre général d'un système de reconnaissance distribuée de la parole où les messages prononcés par l'usager dans le terminal doivent être identifiés par un serveur vocal illustré à la figure 1 b.

Conformément à la figure 1a, le message vocal 10 émis par l'usager est traité dans le terminal lui-même, selon la procédure de reconnaissance distribuée de la parole DSR. Ce traitement est donc effectué dans une unité 20 du terminal comprenant un module 21 permettant d'extraire du signal voisé 10 les paramètres acoustiques nécessaires au système de reconnaissance vocale du serveur pour reconstituer le message prononcé par l'usager. Les méthodes d'extraction de paramètres acoustiques sont bien connues et ne font pas l'objet de la présente invention. On ne fera que rappeler les normes ETSI correspondantes : ES 201 108, ES 202 050 et ES 202 212.

Comme l'indique la figure 1a, l'opération d'extraction des paramètres acoustiques est complétée par la mise en oeuvre d'un mode de transmission discontinue DTX effectuée par un module 22 de l'unité 20 de traitement dans le but de limiter l'envoi de données vers le serveur aux seuls segments de parole. A cette fin, le module 22 reçoit d'un indicateur 23 un signal de début de parole. Ledit indicateur 23 peut être un dispositif « Push-to-Talk » où l'usager presse une touche quand il commence à parler, ou un détecteur d'activité vocale VAD

Le signal fournit par l'unité 20 de traitement du terminal est ainsi constitué de segments 30, 40 de parole comprenant des paquets transportant dans leur charge utile les paramètres acoustiques extraits par le module 21. Chaque segment de parole est terminé par une marque 31, 41 de fin de parole. Les deux segments 30 et 40 de parole consécutifs sont séparés par une période 34 de silence.

On peut voir sur la figure 1a que la marque 31 de parole associée au segment 30 est ré-émise continuellement pendant toute la durée de la période 34 de silence suivant ledit segment. Les marques de fin de parole ré-émises sont référencées 31 a, 31 b, etc.

L'intérêt d'une telle disposition apparaît clairement à la figure 1b sur laquelle est représenté un système 50 de reconnaissance de la parole d'un serveur vocal.

Le signal contenant les paramètres acoustiques de l'usager est transmis à travers le réseau jusqu'au système 50 qui effectue les opérations de reconstitution du message vocal prononcé par l'usager à partir des données reçues dans les segments 30, 40 de parole. La marque 31 de fin de parole sert à indiquer au système 50 que le segment 30 est terminé et qu'il peut effectuer l'opération de reconnaissance pour ce segment.

Si, comme l'indique la figure 1b, la transmission à travers le réseau a été perturbée pendant une durée T tronquant ainsi la fin du segment 30 et, par exemple, les marques 31 et 31 a de fin de parole, la marque 31 b, immédiatement consécutive à la reprise de la transmission, sera détectée par le système 50. L'opération de reconnaissance pourra alors être effectuée de manière précoce, le retard introduit étant de l'ordre de la durée des pertes de réseau, donc certainement plus court qu'avec les mécanismes de temporisation habituellement utilisés.

Sur les figures 1a et 1b, ladite marque 31 de fin de parole est ré-émise à des intervalles de temps de même durée Δt, de l'ordre d'une seconde par exemple. Mais, on peut également envisager que la durée des intervalles de temps séparant deux ré-émissions consécutives soit croissante, dans une progression de facteur 1,5 ou 2 par exemple.

Comme cela a déjà été indiqué plus haut, l'émission des marques 31, 31a,... de fin de parole peut être interrompue sur réception par le terminal d'un message d'acquittement de réception par le serveur d'une marque de fin de parole. Ainsi, dans l'exemple des figures 1a et 1b, après avoir reçu la marque 31b, le serveur peut envoyer au terminal un message d'accusé de réception de cette marque. Le terminal ainsi informé pourra interrompre l'envoi de nouvelles marques 31 c, 31d,...de fin de parole devenues alors inutiles.

Enfin, des économies de bande passante peuvent être réalisées en limitant les paquets transportant les marques 31 a, 31b,...de fin de parole au minimum nécessaire, de manière à ce que leur longueur soit sensiblement inférieure à longueur nominale des paires de trames dans les segments de parole.

## Revendications

1. Procédé de transmission de marques de fin de parole dans un système de reconnaissance distribuée de la parole fonctionnant en mode de transmission discontinue, système dans lequel des segments (30, 40) de parole sont émis, suivis de périodes (34) de silence, chaque segment (30, 40) de parole étant terminé par une marque (31) de fin de parole, **caractérisé en ce que** ladite marque (31) de fin de parole est ré-émise continuellement (31 a, 31 b, 31 c, 31d) pendant toute la durée de la période (34) de silence suivant ledit segment (30) de parole.

2. Procédé selon la revendication 1, **caractérisé en ce que** ladite marque (31) de fin de parole est ré-émise à des intervalles de temps de même durée (Δt).

3. Procédé selon la revendication 1, **caractérisé en ce que** ladite marque de fin de parole est ré-émise à des intervalles de temps de durée (Δt) croissante.

4. Procédé selon l'une des revendications 2 ou 3, **caractérisé en ce que** ladite durée (Δt) est de l'ordre de la seconde.

5. Procédé selon l'une quelconque des revendications 1 à 4, **caractérisé en ce que** la ré-émission de ladite marque (31) de fin de parole est interrompue sur réception d'un message d'acquittement d'une marque (31 b) de fin de parole ré-émise.

6. Procédé selon l'une quelconque des revendications 1 à 5, **caractérisé en ce que** les marques (31, 31 a, 31 b, 31c, 31 d) de fin de parole sont transmises dans des paquets de longueur inférieure à la longueur nominale des paires de trames dans lesdits segments (30, 40) de parole.

7. Terminal d'un système de reconnaissance distribuée de la parole fonctionnant en mode de transmission discontinue, ledit terminal étant apte à émettre des segments (30, 40) de parole, suivis de périodes (34) de silence, chaque segment (30, 40) de parole étant terminé par une marque (31) de fin de parole, **caractérisé en ce que** ledit terminal est apte à ré-émettre ladite marque (31) de fin de parole continuellement (31 a, 31 b, 31c, 31d) pendant toute la durée de la période (34) de silence suivant ledit segment (30) de parole.

8. Terminal selon la revendication 7, **caractérisé en ce que** ladite marque (31) de fin de parole est réémise à des intervalles de temps de même durée (Δt).

9. Terminal selon la revendication 7, **caractérisé en ce que** ladite marque de fin de parole est réémise à des intervalles de temps de durée (At) croissante.

10. Terminal selon l'une des revendications 8 ou 9, **caractérisé en ce que** ladite durée (Δt) est de l'ordre de la seconde.

11. Terminal selon l'une quelconque des revendications 7 à 10, **caractérisé en ce que** les marques (31, 31 a, 31 b, 31 c, 31d) de fin de parole sont transmises dans des paquets de longueur inférieure à la longueur nominale des paires de trames dans lesdits segments (30, 40) de parole.

12. Terminal selon l'une quelconque des revendications 7 à 11, **caractérisé en ce que** la réémission de ladite marque (31) de fin de parole est interrompue sur réception d'un message d'acquittement d'une marque (31b) de fin de parole réémise.

13. Système de reconnaissance distribuée de la parole fonctionnant en mode de transmission discontinue, comprenant au moins un terminal selon la revendication 12, et comprenant un serveur vocal apte à émettre un message d'acquittement d'une marque (31 b) de fin de parole réémise.

## Claims

1. Method of transmitting end-of-speech marks in a distributed speech recognition system operating in discontinuous transmission mode, in which system speech segments (30, 40) are sent, followed by silence periods (34), each speech segment (30, 40) being terminated with an end-of-speech mark (31), **characterized in that** the said end-of-speech mark (31) is re-sent continually (31a, 31b, 31c, 31d) throughout the duration of the silence period (34) following the said speech segment (30).

2. Method according to Claim 1, **characterized in that** the said end-of-speech mark (31) is re-sent at time intervals of the same duration (Δt).

3. Method according to Claim 1, **characterized in that** the said end-of-speech mark is re-sent at time intervals of increasing duration (Δt).

4. Method according to one of Claims 2 or 3, **characterized in that** the said duration (Δt) is of the order of a second.

5. Method according to any one of Claims 1 to 4, **characterized in that** the resending of the said end-of-speech mark (31) is interrupted on receipt of a message acknowledging a re-sent end-of-speech mark (31b).

6. Method according to any one of Claims 1 to 5, **characterized in that** the end-of-speech marks (31, 31a, 31b, 31c, 31d) are transmitted in packets of shorter length than the nominal length of the pairs of frames in the said speech segments (30, 40).

7. Terminal of a distributed speech recognition system operating in discontinuous transmission mode, the said terminal being able to send speech segments (30, 40), followed by silence periods (34), each speech segment (30, 40) being terminated with an end-of-speech mark (31), **characterized in that** the said terminal is able to re-send the said end-of-speech mark (31) continually (31a, 31b, 31c, 31d) throughout the duration of the silence period (34) following the said speech segment (30).

8. Terminal according to Claim 7, **characterized in that** the said end-of-speech mark (31) is re-sent at time intervals of the same duration (Δt).

9. Terminal according to Claim 7, **characterized in that** the said end-of-speech mark is re-sent at time intervals of increasing duration (Δt).

10. Terminal according to one of Claims 8 or 9, **characterized in that** the said duration (Δt) is of the order of a second.

11. Terminal according to one of Claims 7 to 10, **characterized in that** the end-of-speech marks (31, 31a, 31b, 31c, 31d) are transmitted in packets of shorter length than the nominal length of the pairs of frames in the said speech segments (30, 40).

12. Terminal according to any one of Claims 7 to 11, **characterized in that** the resending of the said end-of-speech mark (31) is interrupted on receipt of a message acknowledging a re-sent end-of-speech mark (31b).

13. Distributed speech recognition system operating in discontinuous transmission mode, comprising at least one terminal according to Claim 12, and comprising a voice server able to send a message acknowledging a re-sent end-of-speech mark (31b).

## Patentansprüche

1. Verfahren zur Übertragung von Sprachendemarkierungen in einem System der verteilten Spracherkennung, das im Modus der diskontinuierlichen Übertragung arbeitet, ein System, bei dem Sprachsegmente (30, 40) gefolgt von Stilleperioden (34) gesendet werden, wobei jedes Sprachsegment (30, 40) mit einer Sprachendemarkierung (31) endet, **dadurch gekennzeichnet, dass** die Sprachendemarkierung (31) während der ganzen Dauer der Stilleperiode (34) nach dem Sprachsegment (30) kontinuierlich (31a, 31b, 31c, 31d) erneut gesendet wird.

2. Verfahren nach Anspruch 1, **dadurch gekennzeichnet, dass** die Sprachendemarkierung (31) in Zeitintervallen gleicher Dauer (Δt) erneut gesendet wird.

3. Verfahren nach Anspruch 1, **dadurch gekennzeichnet, dass** die Sprachendemarkierung in Zeitintervallen zunehmender Dauer (Δt) erneut gesendet wird.

4. Verfahren nach einem der Ansprüche 2 oder 3, **dadurch gekennzeichnet, dass** die Dauer (Δt) in der Größenordnung einer Sekunde liegt.

5. Verfahren nach einem der Ansprüche 1 bis 4, **dadurch gekennzeichnet, dass** das erneute Senden der Sprachendemarkierung (31) bei Empfang einer Bestätigungsmitteilung einer erneut gesendeten Sprachendemarkierung (31b) unterbrochen wird.

6. Verfahren nach einem der Ansprüche 1 bis 5, **dadurch gekennzeichnet, dass** die Sprachendemarkierungen (31, 31a, 31b, 31c, 31d) in Paketen einer geringeren Länge als die Nennlänge der Rahmenpaare in den Sprachsegmenten (30, 40) gesendet werden.

7. Endgerät eines Systems der verteilten Spracherkennung, das im diskontinuierlichen Übertragungsmodus arbeitet, wobei das Endgerät fähig ist, Sprachsegmente (30, 40) zu senden, auf die Stilleperioden (34) folgen, wobei jedes Sprachsegment (30, 40) mit einer Sprachendemarkierung (31) endet, **dadurch gekennzeichnet, dass** das Endgerät fähig ist, während der ganzen Dauer der Stilleperiode (34) nach dem Sprachsegment (30) die Sprachendemarkierung (31) kontinuierlich (31a, 31b, 31c, 31d) erneut zu senden.

8. Endgerät nach Anspruch 7, **dadurch gekennzeichnet, dass** die Sprachendemarkierung (31) in Zeitintervallen gleicher Dauer (Δt) erneut gesendet wird.

9. Endgerät nach Anspruch 7, **dadurch gekennzeichnet, dass** die Sprachendemarkierung in Zeitintervallen zunehmender Dauer (Δt) erneut gesendet wird.

10. Endgerät nach einem der Ansprüche 8 oder 9, **dadurch gekennzeichnet, dass** die Dauer (Δt) in der Größenordnung einer Sekunde liegt.

11. Endgerät nach einem der Ansprüche 7 bis 10, **dadurch gekennzeichnet, dass** die Sprachendemarkierungen (31, 31a, 31b, 31c, 31d) in Paketen einer geringeren Länge als die Nennlänge der Rahmenpaare in den Sprachsegmenten (30, 40) gesendet werden.

12. Endgerät nach einem der Ansprüche 7 bis 11, **dadurch gekennzeichnet, dass** das erneute Senden der Sprachendemarkierung (31) bei Empfang einer Bestätigungsmitteilung einer erneut gesendeten Sprachendemarkierung (31b) unterbrochen wird.

13. System der verteilten Spracherkennung, das im diskontinuierlichen Übertragungsmodus arbeitet, mindestens ein Endgerät nach Anspruch 12 und einen Sprachserver aufweist, der in der Lage ist, eine Bestätigungsmitteilung einer erneut gesendeten Sprachendemarkierung (31b) zu senden.
